# EUROPEAN PATENT SPECIFICATION

(11) **EP 0 656 302 B1**
(45) Date of publication and mention of the grant of the patent: **11.02.1998**
(21) Application number: 94203489.3
(22) Date of filing: 30.11.1994
(51) Int. Cl.: B65D 88/54, B65G 65/48

(54) **Device for the discharge of material from a stock container**
Materialausgabevorrichtung aus einem Lagerbehälter
Dispositif de décharge d'un matériau d'un récipient de stockage

(30) Priority: 03.12.1993 NL 9302105
(43) Date of publication of application: 07.06.1995
(73) Proprietor: ALFRA DOSEER- EN WEEGSYSTEMEN B.V., 5531 AJ Bladel (NL)
(72) Inventor: van den Boom, Lambertus Joseph Maria, NL-5061 NH Oisterwijk (NL)
(74) Representative: Iemenschot, Johannes Andreas, Ir.

(56) References cited:
- CH-A- 365 025
- CH-A- 596 065
- DE-A- 3 534 725
- US-A- 4 273 296

## Description

The present invention relates to a device for the discharge of material, particularly cohesive material, from a stock container according to the preamble of claim 1.

Such a device is e.g. known from US 4,273,296. The known device is in particular designed for blowing insulation materal which is conveyed to the discharge opening of the device by means of a rotating hopper blade assembly. A first pair of blades of the blade assembly moves along the discharge opening essentially parallel to the end wall. The other blade pairs of the blade assembly are distributed over the length of the wall part of substantially circular cross-section. The blades have a blade pitch to obtain an auger action towards the discharge opening.

The abovementioned known device is hardly suitable for the discharge of cohesive material as the blades exert a compacting effect on the material to be discharged, with the result that the flow properties thereof are adversely affected. Another disadvantage of the known device is that, in the case of various materials, in particular after the material has been standing for several days in the stock container, there is a risk that compacted material which rests on the wall part of substantially circular cross-section cannot be brought into motion by the blade pairs which are spaced from one another and discharge of this material does not take place.

The object of the present invention is to eliminate the abovementioned problems.

This object is achieved by a device of the type mentioned in the preamble of claim 1, which is characterized in that the second flow-promotion means move along virtually the entire length of the wall part of substantially circular cross-section extending between the end wall parts. This ensures that there are no "dead" corners present in the device where material can remain behind for a fairly long time. This is important in particular in the case of perishable materials, for example in the food industry. The movement of the first flow-promotion means over the discharge opening(s) and the part of the wall lying around said opening(s) ensures that the material is kept moving there, so that it can flow out of the discharge opening(s) without problems. During the movement the first flow-promotion means can contact the wall or be situated a short distance from it. What is important is that the first flow-promotion means do not compact (compress) the material, which would adversely affect the flow properties of the material. The second flow-promotion means according to the invention are placed in that part of the space bounded by the walls of the device and the stock container where said space is bounded vertically downwards by a wall part. Since the outflow of the material in fact occurs under the influence of gravity, causing the material to move in the direction of the discharge opening(s), the part of the wall bounding the space at the bottom side impedes the outflow. This produces a great risk of bridging in the material precisely in the abovementioned part of the space, near the discharge opening(s). The second flow-promotion means ensure that the material is kept moving there, and consequently prevent bridging.

In an advantageous embodiment the first flow-promotion means comprise a rotating drivable shaft which is provided with one or more first flow-promotion elements situated at a distance from the shaft, which shaft is directed essentially at right angles to the wall part bounding the at least one discharge opening and lies at a distance from the at least one discharge opening. Due to the fact that the first flow-promotion means moving along the discharge opening(s) lie at a distance from their axis of rotation, they ensure that the material is effectively set in motion near the discharge opening(s).

In another embodiment the second flow-promotion means comprise a rotating drivable shaft which is provided with second flow-promotion elements disposed all around the shaft. The first flow-promotion means and the second flow-promotion means preferably have a common rotating drivable shaft in this case. This permits a constructionally simple design of the device.

In a preferred embodiment the wall of the device bounds at least a part of a cylinder with end faces, the second flow-promotion means moving along the cylindrical wall part. In the case of this embodiment of the wall the at least one discharge opening is preferably disposed in an end face of the wall, and it is also advantageous for the cylindrical wall part to be placed at an angle to the horizontal, in which case the discharge opening(s) are then situated in the lowest end face. This is advantageous for the functioning of the device, and results in problem-free outflow of the material.

The outflow can be metered through the device having adjusting means for adjusting the width of passage of the at least one discharge opening, for example an adjustable slide valve. The device preferably has a weighing device placed below the at least one discharge opening, for determining the discharge rate from the stock container.

In an advantageous embodiment the drive means can be regulated depending on the discharge rate. In this case provision can also be made for the adjusting means for the width of passage also to be regulable depending on the discharge rate.

The invention will now be explained in greater detail with reference to the drawing, in which:
Fig. 1 is a diagrammatic view, partially in section, of an exemplary embodiment of the device according to the invention;
Fig. 2 is a view in the direction of arrow II in Fig. 1, with the end face of the wall being omitted;
Fig. 3 is a diagrammatic side view, partially in section, of a second exemplary embodiment of the device according to the invention;
Fig. 4 is a diagrammatic rear view of the device in Fig. 3; and
Fig. 5 is a diagrammatic view of a third exemplary embodiment according to the invention.

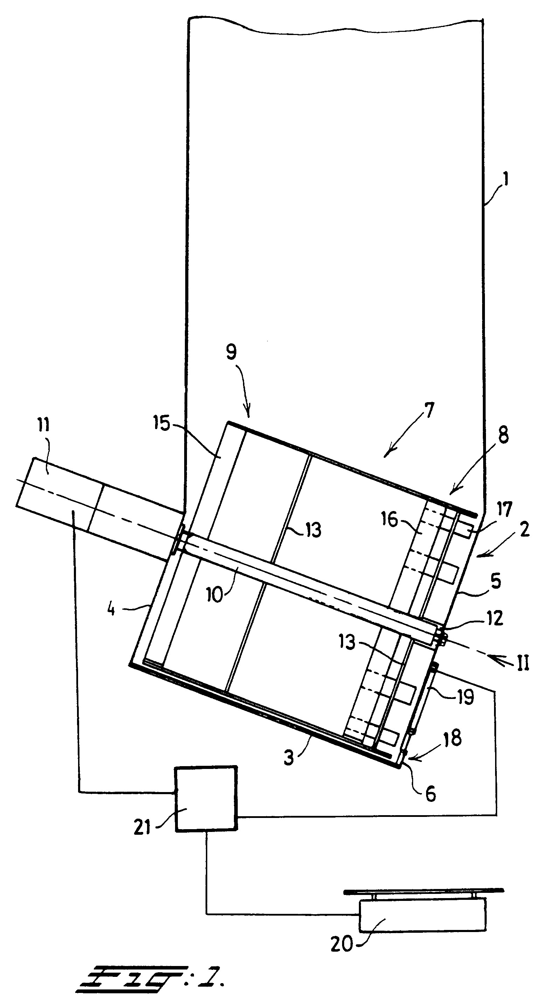

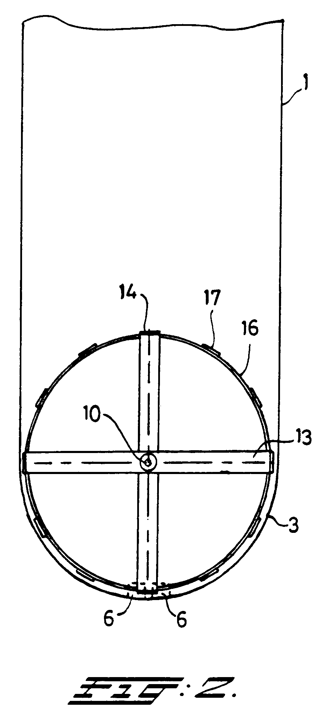

The device shown in Figs. 1 and 2 for the discharge of a material from a stock container 1, in this case a silo with a rectangular cross-section, comprises a wall 2. The wall 2 consists of a semi-cylindrical part 3 and a left and right end face 4, 5 respectively. The end face 5 is provided with two adjacent discharge openings 6. Discharge means 7 according to the invention are provided in order to achieve an outflow of the material from the stock container 1. Said discharge means 7 comprise, on the one hand, first flow-promotion means 8, the object of which is to keep the material moving, in particular at the level of the discharge openings 6, but also along the part of the wall bounding said discharge openings 6. On the other hand, the discharge means 7 comprise second flow-promotion means 9, which keep the material moving in the part of the space formed by the wall 2 and the stock container and bounded vertically downwards by the wall 3, near the discharge openings 6. Bridging is thereby prevented in the material.

The first flow-promotion means 8 and the second flow-promotion means 9 are disposed on a common shaft 10. The shaft 10 can be rotatably driven by an electric motor 11 with a regulable speed of rotation. At the side of the end face 5, the shaft 10 rests in a bearing construction 12 which is suitable for such applications.

In the example shown the first flow-promotion means 8 and the second flow-promotion means 9 are designed in such a way that they are integral. The shaft 10 is provided at two places with four radial, flat spokes 13. Fixed at the ends of these spokes 13 are four axially directed strips 14 whose length virtually corresponds to the cylindrical part 3 of the wall of the device. The two rings 15, 16 are provided for reinforcement. In this case the ring 16 is provided with eight short axial strips 17. In this example the in total 12 strips 14, 17 facing the end face 5 form the first flow-promotion elements. It can be seen clearly from Fig. 2 that they describe a path in which they brush over the discharge openings 6, indicated by dashed lines. The four strips 14, which extend virtually over the full length of the device, form the second flow-promotion elements, which ensure that bridging does not occur at a greater distance from the discharge openings 6. This cage-shaped design of the second flow-promotion elements is advantageous through the fact that the material is not compacted by the second flow-promotion elements.

In order to permit a metered removal of the material, each discharge opening 6 is provided with a corresponding slide valve 18 which can be operated by a cylinder 19. The discharge rate can also be fixed by means of a diagrammatically shown weighing device 20. A regulator 21 then regulates the speed of rotation of the motor 11 and the position of the slide valves 18, so that the desired value of the discharge rate is obtained.

In the case of material which has very poor flow properties the wall of the stock container 1 is preferably formed in such a way that the flow surface for the material determined at right angles to the vertical increases downwards, and the wall parts run, for example, outwards in the downward direction.

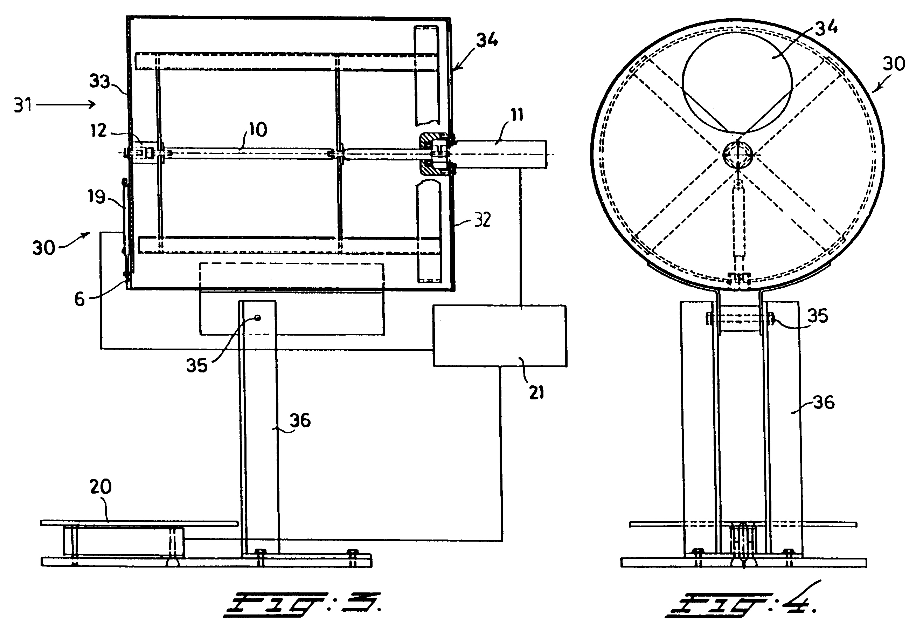

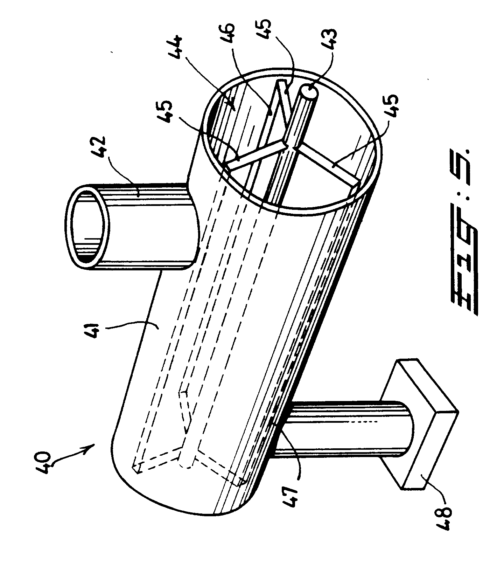

Figs. 3 and 4 show a second exemplary embodiment of the device according to the invention which corresponds in many respects to the first exemplary embodiment of the device described with reference to Figs. 1 and 2. Corresponding parts are therefore indicated by the same reference numbers. One difference between the two exemplary embodiments lies in the fact that the wall of the device 30 in this case is a cylindrical drum 31 with a right end face 32 and a left end face 33. The left end face 33 corresponds to the end face 5 in Fig. 1. The right end face 32 is provided at the top with a filling opening 34. The device 30 thus itself serves as a stock container for the material to be metered. The device 30 is disposed in such a way that it can swivel about a swivel pin 35 of a supporting frame 36. Optimum adaptation to the material to be metered can be obtained by adjusting the position of the device through rotation about the swivel pin 35. Below the discharge opening is a weighing device which is coupled to a regulator for controlling the drive motor and the discharge rate. The embodiment shown in Figs. 3 and 4 is suitable in particular for metering material which is stored and processed in small quantities, for example in the cosmetics industry.

Fig. 5 shows a device 40 which is to be disposed at the bottom of a stock container (not shown) and has a cylindrical wall 41 which is placed at an angle to the horizontal. At the top side the cylindrical wall 41 is provided with a connecting piece 42 for the stock container. The metered discharge of material from the stock container is achieved by flow-promotion elements 44 disposed on a rotating drivable shaft 43. The flow-promotion elements 44 consist of bar-shaped elements 46 placed on spokes 45 and extending virtually over the full length of the device along the cylindrical wall 41. In this case they brush over a discharge opening 47 disposed near the lowest point of the cylindrical wall 41 and also keep the material in the device moving, in order to prevent bridging. The parts of the elements 46 brushing over the discharge opening 47 in this case form the first flow-promotion elements, and the remaining parts form the second flow-promotion elements according to the invention. The outflow rate of the devices can be adjusted by regulating the speed of rotation of the flow-promotion elements 44 and by regulating the width of passage of the discharge opening 47 by means of a regulable slide valve 48.

## Claims

1. Device for the discharge of material, in particular cohesive material, from a stock container (1), comprising a wall defining a space in communication with or forming the stock container, at least the bottom part of the wall of the device being formed by two end wall parts (5) and a wall part (3) of substantially circular cross section along the length thereof extending between the end wall parts, at least one discharge opening (6) being provided in the bottom part of the wall of the device, the device further comprising first flow-promotion means (8), which move along the at least one discharge opening (6) essentially parallel to the part (5) of the wall (2) bounding the at least one discharge opening, second flow-promotion means (9), and drive means for moving the first (8) and second (9) flow-promotion means, **characterized in that**, the second flow-promotion means (9; 46) move along virtually the entire length of the wall part (3; 41) of substantially circular cross-section extending between the end wall parts.

2. Device according to Claim 1, **characterized in that** the first flow-promotion elements (8) comprise a rotating drivable shaft (10) which is provided with one or more first flow-promotion elements (14, 17) situated at a distance from the shaft, which shaft is directed essentially at right angles to the wall part (5) bounding the at least one discharge opening and lies at a distance from the at least one discharge opening.

3. Device according to Claim 1 or 2, **characterized in that** the second flow-promotion means (9) comprise a rotating drivable shaft (10) which is provided with second flow-promotion elements (14) disposed all around the shaft.

4. Device according to Claim 2 or 3, **characterized in that** the first flow-promotion means (8) and the second flow-promotion means (9) have a common rotating drivable shaft (10).

5. Device according to one or more of the preceding claims, **characterized in that** the at least one discharge opening (6) is disposed in an end wall part (5).

6. Device according to one or more of the preceding claims, **characterized in that** the wall part (3) of substantially circular cross-section is placed at an angle with the horizontal.

7. Device according to one or more of the preceding claims, **characterized in that** the device comprises adjusting means (19) for adjusting the width of passage of the at least one discharge opening (6).

8. Device according to one or more of the preceding claims, **characterized in that** the device comprises a weighing device (20) placed below the at least one discharge opening (6), for determining the discharge rate from the stock container (1).

9. Device according to Claim 8, **characterized in that** the drive means (11) can be regulated depending on the discharge flow.

10. Device according to Claims 7 and 9, **characterized in that** the adjusting means (19) for the width of passage can be regulated depending on the discharge rate.

## Patentansprüche

1. Vorrichtung für den Austrag von Material, insbesondere von kohäsivem Material, aus einem Vorratsbehälter (1), umfassend eine Wandung, die einen Raum in Kommunikation mit dem Vorratsbehälter oder diesen selbst bildet, wobei zumindest der Bodenteil der Wandung der Vorrichtung von zwei Endwandungsteilen (5) und einem Wandungsteil (3) mit im wesentlichen kreisförmigem Querschnitt längs der Längserstreckung derselben zwischen den Endwandungsteilen gebildet wird, mindestens eine Austragöffnung (6), die in dem Bodenteil der Wandung der Vorrichtung vorgesehen ist, welche Vorrichtung ferner erste strömungsbegünstigende Mittel (8), die sich längs der zumindest einen Austragöffnung (6) bewegen im wesentlichen parallel zu dem Teil (5) der Wandung (2), der die mindestens eine Austragöffnung begrenzt, zweite strömungsbegünstigende Mittel (9) und Antriebsmittel für das Bewegen der ersten (8) und zweiten (9) strömungsbegünstigenden Mittel umfasst, **dadurch gekennzeichnet**, daß die zweiten strömungsbegünstigenden Mittel (9, 46) sich längs nahezu der gesamten Länge des Wandungsteils (3, 41) von im wesentlichen kreisförmigem Querschnitt bewegen, der sich zwischen den Endwandungsteilen erstreckt.

2. Vorrichtung nach Anspruch 1, dadurch gekennzeichnet, daß die ersten strömungsbegünstigenden Mittel (8) eine zum Umlauf antreibbare Welle (10) umfassen, die mit einem oder mehreren ersten strömungsbegünstigenden Elementen (14, 17) versehen ist, die sich in einem Abstand von der Welle befinden, welche Welle im wesentlichen rechtwinklig zu dem Wandungsteil (5) gerichtet ist, der die mindestens eine Austragöffnung begrenzt, und in einem Abstand von der mindestens einen Austragöffnung liegt.

3. Vorrichtung nach Anspruch 1 oder 2, dadurch gekennzeichnet, daß die zweiten strömungsbegünstigenden Mittel (9) eine zum Umlauf antreibbare Welle (10) umfassen, die mit zweiten strömungsbegünstigenden Elementen (14) rings um die gesamte Welle versehen ist.

4. Vorrichtung nach Anspruch 2 oder 3, dadurch gekennzeichnet, daß die ersten strömungsbegünstigenden Mittel (8) und die zweiten strömungsbegünstigenden Mittel (9) eine gemeinsame zum Umlauf antreibbare Welle (10) haben.

5. Vorrichtung nach einem oder mehreren der vorangehenden Ansprüche, dadurch gekennzeichnet, daß die zumindest eine Austragöffnung (6) in einem Endwandungsteil (5) angeordnet ist.

6. Vorrichtung nach einem oder mehreren der vorangehenden Ansprüche, dadurch gekennzeichnet, daß der Wandungsteil (3) von im wesentlichen kreisförmigem Querschnitt unter einem Winkel gegen die Horizontale positioniert ist.

7. Vorrichtung nach einem oder mehreren der vorangehenden Ansprüche, dadurch gekennzeichnet, daß die Vorrichtung Einstellmittel (19) für das Einstellen der Breite der Passage der mindestens einen Austragöffnung (6) umfasst.

8. Vorrichtung nach einem oder mehreren der vorangehenden Ansprüche, dadurch gekennzeichnet, daß die Vorrichtung eine Wiegevorrichtung (20) umfasst, die unter der mindestens einen Austragöffnung (6) für die Bestimmung der Austragrate aus dem Vorratsbehälter (1) positioniert ist.

9. Vorrichtung nach Anspruch 8, dadurch gekennzeichnet, daß die Antriebsmittel (11) in Abhängigkeit von dem Austragfluß regulierbar sind.

10. Vorrichtung nach Anspruch 7 und 9, dadurch gekennzeichnet, daß die Einstellmittel (19) für die Breite des Durchtritts in Abhängigkeit von der Austragrate regulierbar sind.

## Revendications

1. Dispositif pour le déchargement d'un matériau, en particulier un matériau cohérent, d'un conteneur de stockage (1), comportant une paroi définissant un espace communiquant avec le conteneur de stockage ou formant celui-ci, au moins une partie de base de la paroi du dispositif étant formée par deux parties de paroi d'extrémité (5) et une partie de paroi (3) dont la section transversale est essentiellement circulaire sur la longueur de cette partie qui s'étend entre les parties de paroi d'extrémité, au moins une ouverture de déchargement (6) étant prévue dans la partie de base de la paroi du dispositif, le dispositif comportant en outre des premiers moyens (8) favorisant l'écoulement, qui se déplacent le long de l'ouverture de déchargement (6) au moins présente, essentiellement en parallèle à la partie (5) de la paroi (2) délimitant l'ouverture de déchargement au moins présente, des deuxièmes moyens (9) favorisant l'écoulement et des moyens d'entraînement pour déplacer les premiers (8) et les deuxièmes (9) moyens favorisant l'écoulement, caractérisé en ce que les deuxièmes moyens (9; 46) favorisant l'écoulement se déplacent sur pratiquement toute la longueur de la partie de paroi (3; 41) de section transversale essentiellement circulaire qui s'étend entre les parties de paroi d'extrémité.

2. Dispositif selon la revendication 1, caractérisé en ce que les premiers moyens (8) favorisant l'écoulement comportent un arbre (10) pouvant être entraîné en rotation, qui est doté d'un ou plusieurs premiers éléments (14, 17) favorisant l'écoulement situés à distance de l'arbre, lequel arbre est orienté essentiellement à angle droit par rapport à la partie de paroi (5) délimitant l'ouverture de déchargement au moins présente, et est situé à distance de l'ouverture de déchargement au moins présente.

3. Dispositif selon la revendication 1 ou 2, caractérisé en ce que les deuxièmes moyens (9) favorisant l'écoulement comportent un arbre (10) pouvant être entraîné en rotation, qui est doté de deuxièmes éléments (14) favorisant l'écoulement disposés tout autour de l'arbre.

4. Dispositif selon la revendication 2 ou 3, caractérisé en ce que les premiers moyens (8) favorisant l'écoulement et les deuxièmes moyens (9) favorisant l'écoulement ont un arbre commun (10) pouvant être entrainé en rotation.

5. Dispositif selon l'une ou plusieurs des revendications précédentes, caractérisé en ce que l'ouverture de déchargement (6) au moins présente est disposée dans une partie de paroi d'extrémité (5).

6. Dispositif selon l'une ou plusieurs des revendications précédentes, caractérisé en ce que la partie de paroi (3) de section transversale essentiellement circulaire est disposée obliquement par rapport à l'horizontale.

7. Dispositif selon l'une ou plusieurs des revendications précédentes, caractérisé en ce que le dispositif comporte des moyens d'ajustement (19) pour ajuster la largeur de passage de l'ouverture de déchargement (6) au moins présente.

8. Dispositif selon l'une ou plusieurs des revendications précédentes, caractérisé en ce que le dispositif comporte un dispositif de pesage (20) disposé en dessous de l'ouverture de déchargement (6) au moins présente, pour déterminer la vitesse de déchargement du conteneur de stockage (1).

9. Dispositif selon la revendication 8, caractérisé en ce que les moyens d'entraînement (11) peuvent être régulés en fonction de l'écoulement de déchargement.

10. Dispositif selon les revendications 7 et 9, caractérisé en ce que les moyens d'ajustement (19) de la largeur de passage peuvent être régulés en fonction de la vitesse de déchargement.
